# EUROPÄISCHE PATENTSCHRIFT

(11) **EP 0 650 999 B1**
(45) Veröffentlichungstag und Bekanntmachung des Hinweises auf die Patenterteilung: **21.07.1999**
(21) Anmeldenummer: 94114697.9
(22) Anmeldetag: 19.09.1994
(51) Int. Cl.: C08J 3/03, C08L 5/08

(54) **Verfahren zur Herstellung hochviskosen Chitosan-Gelen**
Process for preparing highly viscous chitosen gels
Procédé pour la préparation de gels de chitosane à haute viscosité

(30) Priorität: 30.10.1993 DE 4337152
(43) Veröffentlichungstag der Anmeldung: 03.05.1995
(73) Patentinhaber: MERCK PATENT GmbH, 64293 Darmstadt (DE)
(72) Erfinder: Nies, Berthold, Dr., D-64407 Fränkisch-Crumbach (DE)

(56) Entgegenhaltungen:
- EP-A- 0 002 506
- DE-A- 3 600 333
- DATABASE WPI Week 8944, Derwent Publications Ltd., London, GB; AN 320708 & JP-A-1 239 077 (KATAKURA CHIHKARIN) 25. September 1989 & CHEMICAL ABSTRACTS, vol. 113, no. 7, 13. August 1990, Columbus, Ohio, US; abstract no. 58006z, Seite 602 ;
- DATABASE WPI Week 8637, Derwent Publications Ltd., London, GB; AN 241855 & JP-A-61 170 376 (SEIKEN KK) 1. August 1986
- MANUFACTURING CHEMIST, Bd.55, Nr.10, 30. Oktober 1984, LONDON GB Seiten 47 - 49 EDGAR S. LOWER 'Polymers from the Sea Chitin & Chitosan'

## Beschreibung

Die Erfindung betrifft ein neues Verfahren zur Herstellung hochviskoser Chitosan-Gele sowie ein Verfahren zur Herstellung von salzartigen Addukten von Chitosan und Chelatkomplexbildnern.

Chitosan ist ein kationisches Biopolymer, das aus wiederkehrenden Einheiten von 1,4-verknüpftem D-Glucosamin aufgebaut ist. Chitosan ist das Desacetylierungsprodukt von Chitin, das als Gerüstsubstanz der Panzer und Schalen von Krebsen, Insekten u. ä. in der belebten Natur weit verbreitet ist. Als natürlicher Rohstoff, der in einfacher und umweltverträglicher Weise aus natürlichen regenerierbaren Quellen zugänglich ist, findet Chitosan vermehrt Interesse in industriellen Anwendungen. Eine wesentliche Eigenschaft von Chitosan ist die Fähigkeit, viskose wäßrige Lösungen zu bilden. Derartige Lösungen können in Chemie, Pharmazie, Kosmetik und Lebensmitteltechnologie vielfältige Anwendungen finden. Beispiele hierfür sind etwa der Einsatz als Verdickungsmittel, Gelbildner, Bindemittel, Filmbildner und Klebstoff. Chitosan dient auch als natürlich abbaubares Flokkungshilfsmittel für die Abwasserreinigung. Dem gleichen Anwendungszweck kommt auch die Eigenschaft, Schwermetalle zu binden, zu Gute. Als biokompatibles bzw. bioresorbierbares Polymer ist Chitosan besonders interessant in pharmazeutischen und medizinischen Anwendungen, wie beispielsweise als Bestandteil von Wundabdeckungen oder von Werkstoffen für die Endoprothetik.

Aus DE-A1-36 00 333 sind Membranen zur Tennung von Flüssigkeiten bekannt, die u. a auch aus vernetzten Chitosanen bestehen können. Die Vernetzung wird je nach geplanter Anwendung durch Umsetzung mit mehrwertigen Säuren oder mehrwertigen Metallionen erfolgen. Es werden dadurch wasserbeständige Membranen erhalten, durch die Flüssigkeitsgemische, u. a. auch Wasser- Alkoholgemische, getrennt werden können.

Aus dem Derwent Abstract 89-320708 der japanischen Patentanmeldung JP-A-01239077 sind niedrig viskose, wäßrige Lösungen bekannt, die durch Lösen von Chitosan in Gegenwart von EDTA und geringen Mengen organischer Säuren erhalten werden. Bei dem Chitosan kann es sich um chemisch oder enzymatisch gespaltenes Chitosan handeln, das in wäßriger Lösung bei einer Konzentration von 19,4mg/ml zu einer Viskosität von 5 cps führt.

Aus der europäischen Patentanmeldung EP-A1-0 002 506 wiederum sind wäßrige Formulierungen zur Behandlung der Haare bekannt, in denen wasserlösliche Salze des Chitosans als wirksame Substanz enthalten sind. Zur Salzbildung mit dem Chitosan werden wasserlösliche organische Säuren verwendet.

Allerdings setzt die spezifische Löslichkeitscharakteristik von Chitosan dem praktischen Einsatz Grenzen. Als wäßrige Lösungsmedien für Chitosan sind nur einwertige Mineralsäuren wie Salzsäure bzw. wäßrige Lösungen einiger organischer Säuren wie beispielsweise Essigsäure und Milchsäure geeignet. Chitosan ist unlöslich in mehrwertigen anorganischen Säuren, wie Schwefelsäure und Phosphorsäure, sowie in praktisch allen üblichen organischen Lösungsmitteln. Chitosan-Lösungen können also nur dort eingesetzt werden, wo das wäßrig-saure Lösungsmedium unproblematisch ist. Die Einstellung bestimmter Viskositätswerte ist im wesentlichen nur über die Konzentration von Chitosan in der Lösung möglich. Hochviskose Lösungen bzw. Gele sind nur durch eine entsprechend hohe Wahl der Chitosan-Konzentration zu erzielen, was wiederum für viele Anwendungen unerwünscht oder nachteilig ist. Wünschenswert wären hohe Viskositätswerte bei vergleichsweise niedriger Chitosan-Konzentration.

Es wurde nun gefunden, daß sich Chitosan in Wasser problemlos in einem weiten Konzentrationsbereich lösen läßt, wenn man saure Chelatkomplexbildner zugibt. Weiterhin wurde gefunden, daß sich bei solchen Lösungen die Viskosität drastisch bis hin zu hochviskosen Gelen erhöhen läßt, ohne Änderungen an der ursprünglichen Chitosan-Konzentration vornehmen zu müssen, wenn man diesen Lösungen Salze von mehrwertigen Metallen und Säuren, in denen Chitosan nur mäßig löslich oder unlöslich ist, zufügt.

Schließlich wurde noch gefunden, daß sich Chitosan und Chelatkomplexbildner aus gemeinsamer wäßriger Lösung durch Entzug des Wassers oder durch Fällung mit einem organischen Lösungsmittel in Form eines salzartigen Adduktes zurückgewinnen lassen. Dieses Addukt läßt sich problemlos in Wasser wieder auflösen.

Gegenstand der Erfindung ist somit ein Verfahren zur Herstellung von wäßrigen Lösungen und Gelen von Chitosan bei dem man Chitosan und einen sauren Chelatkomplexbildner in Wasser auflöst.

Gegenstand der Erfindung ist weiterhin ein Verfahren zur Herstellung hochviskoser Chitosan-Gele bei dem man zu wäßrigen Lösungen, die Chitosan und einen sauren Chelatkomplexbildner enthalten, Salze von mehrwertigen Metallen und Säuren, in denen Chitosan nur mäßig löslich oder unlöslich ist, zugibt.

Gegenstand der Erfindung ist schließlich ein salzartiges Addukt von Chitosan und Chelatkomplexbildner, das sich durch Wasserentzug oder durch Fällung mit einem organischen Lösungsmittel aus entsprechenden Lösungen erhalten läßt.

Bei dem erfindungsgemäßen Verfahren kann beliebiges handelsübliches Chitosan eingesetzt werden.

Die in dem erfindungsgemäßen Verfahren einzusetzenden sauren Chelatkomplexbildner sind an sich bekannt, etwa aus dem Bereich der chemischen Analytik und insbesondere aus der Komplexometrie. Geeignet für den erfindungsgemäßen Zweck sind alle zwei- oder mehrzähnigen Chelatkomplexbildner, die in der Lage sind, mit insbesondere mehrwertigen Metallionen stabile Chelatkomplexe zu bilden. Vorzugsweise werden die kommerziell leicht erhältlichen Komplexbildner Nitrilotriessigsäure (NTA), Ethylendiamintetraessigsäure (EDTA), Diethylentriaminpentaessigsäure (DTPA), Triethylentetraminhexaessigsäure (TTHA) oder Diaminocyclohexantetraessigsäure (DCTA) verwendet. Diese können vorzugsweise in Form der freien Säuren, aber auch in Form ihrer (partiellen) Natrium-Salze eingesetzt werden. Besonders bevorzugt ist EDTA.

Es hat sich herausgestellt, daß sich Chitosan zusammen mit derartigen Chelatkomplexbildnern problemlos in einem weiten Konzentrationsbereich in Wasser lösen läßt, wobei auch das Massenverhältnis zwischen Chitosan und dem Komplexbildner weitgehend unproblematisch ist. So lassen sich Chitosan und Chelatkomplexbildner im Massenverhältnis von 1:0,3 bis 1:5 in Wasser zu Lösungen mit einem Gesamtgehalt von 0,1 bis 25 Gew.-% ohne weiteres lösen. Bei niedermolekularem Chitosan sind auch höhere Gesamtgehalte, etwa bis ca. 50 Gew.-%, möglich. Diese Befunde sind sehr überraschend, da zum einen die Chelatkomplexbildner im Vergleich zu den als Lösungsmittel für Chitosan üblichen Säuren bzw. Säurelösungen nur einen schwachen Säurecharakter aufweisen und zum anderen diese Chelatkomplexbildner in Wasser selbst nur eine geringe Löslichkeit haben. So lösen sich beispielsweise bei 22,5 °C in Wasser von EDTA nur 0,5 g/l, von NTA 1,28 g/l und von DTPA 3,5 g/l. Es wird vermutet, daß Chitosan und Chelatkomplexbildner einen sich gegenseitig verstärkenden löslichkeitssteigernden Effekt aufeinander ausüben.

Das praktische Vorgehen bei der Herstellung der Lösung ist einfach. Chitosan und der jeweilige Chelatkomplexbildner werden im gewünschten Verhältnis und in der gewünschten Menge als pulverige Feststoffe in Wasser, vorzugsweise unter intensivem Rühren, suspendiert, wobei sich die Komponenten nach und nach auflösen. Verhältnis und Menge der Lösungskomponenten werden nach Maßgabe der vorgesehenen Anwendung gewählt. Die Eigenschaften der Lösung, insbesondere der Viskositätswert, lassen sich ohne weiteres ermitteln bzw. durch einfach Vorversuche im Hinblick auf den Anwendungszweck vorherbestimmen.

Aus den wäßrigen Lösungen, die Chitosan und einen sauren Chelatkomplexbildner enthalten, lassen sich diese in Form eines salzartigen Adduktes durch Wasserentzug oder durch Fällung mit einem organischen Lösungsmittel zurückgewinnen. In derartigen Addukten ist von einer ionischen Wechselwirkung zwischen Chitosan und Komplexbildner, bedingt durch deren jeweiligen kationischen bzw. anionischen Charakter, auszugehen. Der Wasserentzug wird vorzugsweise mittels Sprühtrocknung oder Gefriertrocknung vorgenommen, wobei man das Addukt in feinpulvriger Form erhält.

Die Fällung des Chitosan-Chelatkomplexbildner-Adduktes aus der wäßrigen Lösung gelingt ohne weiteres mit Hilfe der üblichen organischen Lösungsmittel, in denen Chitosan typischerweise unlöslich ist. Als Beispiele seien Aceton, Methanol, Ethanol und Isopropanol genannt.

Ein Wiederauflösen derartiger Addukte in Wasser ist ohne weiteres und ohne irgend eine Einschränkung der ursprünglichen Löslichkeit möglich.

Derartige Chitosan-Chelatkomplexbildner-Addukte stellen somit wertvolle und besonders einfach zu handhabende Ausgangsprodukte zur Herstellung von Chitosanlösungen und -Gelen dar.

Gemäß dem weiteren Aspekt der Erfindung lassen sich die vorstehend beschriebenen Chitosan-Lösungen in ihrer Viskosität drastisch erhöhen bzw. in hochviskose Gele überführen, ohne daß hierfür zusätzliches Chitosan in die Lösung eingebracht werden muß. Dieser Effekt läßt sich dadurch erzielen, daß man zu den wäßrigen Lösungen, die Chitosan und einen sauren Chelatkomplexbildner enthalten, Salze von mehrwertigen Metallen und Säuren, in denen Chitosan nur mäßig löslich oder unlöslich ist, zugibt. Besonders geeignet sind die Salze von 2-wertigen Metallen und hiervon, insbesondere im Hinblick auf kosmetische, pharmazeutische und medizinische Anwendungen der Lösungen bzw. Gele, die Salze von Calcium und Magnesium. Als diesen Salzen zugrundeliegende Säuren sind insbesondere Kohlensäure, Schwefelsäure, Phosphorsäure und Oxalsäure zu nennen.

Zur Auslösung der Viskositätserhöhung bzw. Gelbildung werden entsprechende Salze einfach in die Chitosan-Lösung eingerührt, wobei diese sich mehr oder weniger schnell auflösen. Die einzusetzende Menge an Salz ist in weiten Bereichen unkritisch und wird allenfalls von dessen spezifischer Löslichkeit in dem System limitiert. Zweckmäßig ist der Einsatz in einem Gewichtsverhältnis zu in der Lösung enthaltenem Chitosan von 0,01:1 bis 5:1 bzw. in einem Molverhältnis zu in der Lösung befindlichen Chelatkomplexbildner von 0,01:1 bis 5:1. Das von Fall zu Fall zu wählende Verhältnis richtet sich nach dem gewünschten Viskositätswert, was sich in einfachen Routineversuchen ermitteln läßt. Im Verlaufe des Auflösungsvorganges erhöht sich die Viskosität der Lösung kontinuierlich. Typischerweise liegen die Endviskositäten um den 4- bis 20fachen Wert über der Ausgangsviskosität. Je nach Ausgangsviskosität der Lösung und Menge des zugesetzten Salzes können mittel- bis höherviskose Lösungen und hochviskose Gele erzeugt werden. Dieser Effekt ist vermutlich darauf zurückzuführen, daß die Kationen des in das System eingebrachten Salzes eine stärkere Bindung mit dem Chelatkomplexbildner eingehen, dadurch dessen lösungsvermittelnden Effekt bezüglich Chitosan reduzieren und im Verbund mit der gleichzeitig freigesetzten Säure die Löslichkeit des Chitosan herabsetzen.

Mit der vorliegenden Erfindung werden somit in einfacher Weise Chitosan-Gele mit maßgeschneiderten Viskositätswerten, insbesondere solche mit hoher Viskosität bei vergleichsweise niedriger Ausgangskonzentration, für die vielfältigsten Anwendungsgebiete bereitgestellt.

### Beispiel 1 (Vergleichsbeispiel)

100 g Chitosan werden zusammen mit 70 g EDTA in 5 l demineralisiertem Wasser unter Rühren gegeben. Nach 12stündigem Rühren erhält man eine klare viskose Lösung mit einem Viskositätswert von 870 cps.

### Beispiel 2 (Vergleichsbeispiel)

Analog zu Beispiel 1 wird eine Lösung hergestellt aus 100 g Chitosan und 50 g NTA. Viskosität: 950 cps.

### Beispiel 3 (Vergleichsbeispiel)

Analog zu Beispiel 1 wird eine Lösung hergestellt aus 100 g Chitosan und 80 g DTPA. Viskosität: 850 cps.

### Beispiel 4

Zu der Lösung nach Beispiel 1 wird pulvriges Calciumcarbonat im Mengenverhältnis 0,5 g/100 ml Lösung eingerührt. Der Auflösungsvorgang erfolgt unter geringer Gasentwicklung (CO₂). Danach ist die Lösung klar. Die Viskosität beträgt 3640 cps.

### Beispiel 5

Zu der Lösung nach Beispiel 1 wird pulvriges Calciumcarbonat im Mengenverhältnis 1 g/100 ml Lösung eingerührt. Die Lösung bleibt trüb, da sich noch nicht alles Calciumcarbonat gelöst hat. Die Viskosität beträgt 4700 cps.

Nach einer Standzeit von 3 Tagen bei 25 °C ist die Lösung klar. Die Viskosität beträgt 15600 cps.

### Beispiel 6

1 l der gemäß Beispiel 1 erhaltenen Lösung wird sprühgetrocknet. Man erhält ein feinpulveriges Produkt.

1 g dieses Pulvers löst sich in 100 ml Wasser unter Rühren innerhalb 15 Min. rückstandslos zu einer viskosen Lösung auf.

### Beispiel 7

1 l der gemäß Beispiel 1 erhaltenen Lösung wird in flacher Schicht (1 cm) bis zu einer Restfeuchte von 15 % gefriergetrocknet. Das erhaltene Produkt wird fein pulverisiert.

1 g dieses Pulvers löst sich in 100 ml Wasser unter Rühren innerhalb 15 Min. rückstandslos zu einer viskosen Lösung auf.

### Beispiel 8

Zu 1 l der gemäß Beispiel 1 erhaltenen Lösung werden unter kräftigem Rühren langsam 500 ml Aceton zugesetzt. Das Chitosan-EDTA-Addukt fällt dabei quantitativ aus und setzt sich nach Abschalten des Rührwerkes ab. Man erhält das Produkt durch Abtrennen von der Lösung, Waschen mit Aceton und Trocknen.

1 g des pulverisierten Produktes löst sich in 100 ml Wasser unter Rühren innerhalb von 15 Min. rückstandslos zu einer viskosen Lösung auf.

## Patentansprüche

1. Verfahren zur Herstellung hochviskoser Chitosan-Gele, dadurch gekennzeichnet, daß man zu wäßrigen Lösungen, die Chitosan und einen sauren Chelatkomplexbildner enthalten, Salze von mehrwertigen Metallen und Säuren zugibt, in denen Chitosan nur mäßig oder unlöslich ist.

2. Verfahren nach Anspruch 1, dadurch gekennzeichnet, daß man die Carbonate, Sulfate, Phosphate oder Oxalate von Calcium oder Magnesium zugibt.

3. Verfahren nach den Ansprüchen 1 oder 2, dadurch gekennzeichnet, daß man die Salze zu Lösungen, die Chitosan und Chelatkomplex-bildner im Massenverhältnis von 1:0,3 bis 1:5 in Wasser bei einem Gesamtgehalt von 0,1 bis 25 Gew.-% enthalten, zugibt.

4. Verfahren nach einem oder mehreren der Ansprüche 1 bis 3, dadurch gekennzeichnet, daß als Chelatkomplexbildner Nitrilotriessigsäure, Ethylendiamintetraessigsäure, Diethylentriaminpentaessigsäure, Triethylentetraminhexaessigsäure oder Diaminocyclohexantetraessigsäure eingesetzt wird.

5. Verfahren zur Herstellung von salzartigen Addukten von Chitosan und Chelatkomplexbildnern, dadurch gekennzeichnet, daß
a) eine Lösung gemäß einem oder mehreren der Ansprüche 1 bis 4 hergestellt wird, und
b) aus dieser Lösung die salzartigen Addukte von Chitosan und Chelatkomplexbildnern durch Wasserentzug
oder
durch Fällung mit einem organischen Lösungsmittel erhalten werden.

## Claims

1. Process for preparing high-viscosity chitosan gels, characterized in that salts of polyvalent metals and acids in which chitosan is insoluble or only moderately soluble are added to aqueous solutions comprising chitosan and an acid chelating agent.

2. Process according to Claim 1, characterized in that the carbonates, sulfates, phosphates or oxalates of calcium or magnesium are added.

3. Process according to Claim 1 or 2, characterized in that the salts are added to solutions which comprise chitosan and chelating agents in a mass ratio of from 1:0.3 to 1:5 in water at a total content of from 0.1 to 25% by weight.

4. Process according to one or more of Claims 1 to 3, characterized in that the chelating agent used is nitrilotriacetic acid, ethylenediaminetetraacetic acid, diethylenetriaminepentaacetic acid, triethylenetetraaminehexaacetic acid or diaminocyclohexanetetraacetic acid.

5. Process for preparing salt-like adducts of chitosan and chelating agents, characterized in that
a) a solution according to one or more of Claims 1 to 4 is prepared, and
b) the salt-like adducts of chitosan and chelating agents are obtained from this solution by removal of water
or
by precipitation using an organic solvent.

## Revendications

1. Procédé pour la préparation de gels très visqueux de chitosane, caractérisé en ce que l'on ajoute à des solutions aqueuses, qui contiennent du chitosane et un agent chélateur acide, des sels d'acides et de métaux plurivalents, dans lesquels le chitosane n'est que modérément soluble ou est insoluble.

2. Procédé selon la revendication 1, caractérsé en ce que l'on ajoute les carbonates, sulfates, phosphates ou oxalates du calcium ou du magnésium.

3. Procédé selon la revendication 1 ou 2, caractérisé en ce que l'on ajoute les sels à des solutions qui contiennent du chitosane et un agent chélateur en un rapport massique de 1:0,3 à 1:5 dans de l'eau, à une concentration totale de 0,1 à 25 % en poids.

4. Procédé selon une ou plusieurs des revendications 1 à 3, caractérisé en ce que l'on utilise comme agent chélateur l'acide nitrilotriacétique, l'acide éthylènediaminetétraacétique, l'acide diéthylènetriamine-pentaacétique, l'acide triéthylènetétraminehexaacétique ou l'acide diaminocyclohexanetétraacétique.

5. Procédé pour la préparation d'adducts de type sel de chitosane et d'agents chélateurs, caractérisé en ce que
a) on prépare une solution selon une ou plusieurs des revendications 1 à 4, et
b) on obtient à partir de cette solution les adducts de type sel de chitosane et d'agents chélateurs,
par déshydratation
ou par précipitation à l'aide d'un solvant organique.
